# EUROPEAN PATENT APPLICATION

(11) **EP 3 968 706 A1**
(43) Date of publication of application: **16.03.2022**
(21) Application number: 20195545.7
(22) Date of filing: 10.09.2020
(51) Int. Cl.: H04W 52/28, H04B 7/06, H04W 52/24

(54) **A WIRELESS INDUSTRIAL DEVICE AND A METHOD THEREFOR**

(71) Applicant: Siemens Aktiengesellschaft, 80333 München (DE)
(72) Inventor: Lampe, Mattias, Beijing, 100102 (CN); Meyer, Martin, 90425 Nürnberg (DE); Richter, Siegfried, 91207 Lauf (DE); Sinn, Ulrich, 91056 Erlangen (DE); Weiler, Christoph, 75015 Bretten (DE)

(57) **Abstract**

The current disclosure describes an industrial device for wirelessly communicating with a plurality of other industrial devices in an industrial facility. The industrial device comprises a radio subsystem for transmitting and receiving data, and a controller for operating the radio subsystem. The radio subsystem comprises one or more antennas, each antenna capable of transmitting data using transmission power in a first range. The controller is configured to determine a location of the industrial device in a first section in the industrial facility, determine an orientation of at least one antenna from the one or more antennas in the industrial facility, and configure the at least one antenna for transmission based on the determined location of the industrial device and the orientation of the at least one antenna. Configuring the at least one antenna includes determining a first transmission power for the at least one antenna, from the first range.

## Description

The current disclosure relates to wireless communication in industrial automation environments and more specifically, to mobile wireless communication devices in industrial facilities. With increasing implementation of industrial internet of things and other Industry 4.0 concepts in factories, plants and other industrial facilities, a plurality of assets in these facilities will be connected wirelessly. Several wireless networks and technologies such as cellular networks, local area networks, short range communication techniques such as Bluetooth, Near Field Communication, etc., may be utilized in enabling wireless communication.

Currently, with the introduction of 5G Private Networks, industrial enterprises have the option to deploy private cellular networks within their facilities to complement existing wireless communication infrastructure. Such deployment can improve security, coverage, performance, etc. However, frequencies for use in these private networks are regulated by governmental agencies and have to applied for. For example, the use of the frequency range 3700 MHz - 3800 MHz in Germany is regulated and an application for licence of these frequencies must be submitted by the industrial enterprise. The application must specify, among other things, the geographical area in which the private network would operate and frequencies which would be used by the private network.

While making the application, the industrial enterprise (also referred to as the licensee) must draw up a frequency spectrum usage concept and indicate the measures for ensure efficient use of spectrum in terms of compliance with interference ranges. Accordingly, the industrial enterprise is required to provide a description of interference mitigation techniques, e.g. information on the antennas used in terms of type, shielding measures, etc.

While the use of such interference mitigation techniques are well known with regards to stationary device, these are not easily applicable to mobile devices such as automated guided vehicles. In industrial applications, mobile stations are also desirable, for example at Automated Guided Vehicles (AGV). These mobile devices can travel within buildings where high transmission power is required. However, due to this mobile operation, the mobile devices may also travel along the border of the proposed licensed area. While operating in such areas, it is likely that these mobile devices may cause disruption in neighbouring networks which may belong to other licensees. Accordingly, there is a need for a device and a method which addresses the above mentioned issues.

Accordingly, the current disclosure describes an industrial device accordingly to claim 1, method according to claim 8 and non-transitory storage medium according to claim 10 which addresses the above-mentioned aspects.

Accordingly, the current disclosure describes an industrial device for wirelessly communicating with a plurality of other industrial devices in an industrial facility. The industrial facility comprises a first section and a second section. The industrial device comprises a radio subsystem for transmitting and receiving data, and a controller for operating the radio subsystem. The radio subsystem comprises one or more antennas, each antenna capable of transmitting data using transmission power in a first range. The controller is configured to determine a location of the industrial device in the first section in the industrial facility, determine an orientation of at least one antenna from the one or more antennas in the industrial facility, and configure the at least one antenna for transmission based on the determined location of the industrial device and the orientation of the at least one antenna. Configuring the at least one antenna includes determining a first transmission power for the at least one antenna, from the first range.

Accordingly, the current disclosure describes an industrial device which is capable of selecting an appropriate transmission power based on the location of the industrial device in the industrial facility and the orientation of the antennas of the industrial device. Accordingly, when the industrial device is within radio proximity of a neighbouring network or when the antenna is oriented towards a neighbouring network, the transmission power may be determined such that transmission from the industrial device does not cause significant interference in the neighbouring network. Accordingly, utilization of such devices would mitigate interference and result in effective utilization of licensed frequencies in private networks.

In an example, the at least one antenna is activated for transmission and reception subsequent to configuration of the at least one antenna by the controller. Accordingly, transmission power is automatically adjusted prior to any transmission. In an example, the industrial device is capable of movement within the industrial facility and includes a location detection subsystem for determining the location of the industrial device in the industrial facility. In an example, the radio subsystem is configured to use a first set of frequencies associated with a first wireless network in the first section, wherein the first set of frequencies are from a licensed spectrum.

In an example, the first section comprises an area bound by one or more borders within which a first wireless network is present. In an example, the second section includes a second wireless network configured to use a second set of frequencies. The second wireless network may be referred to as the neighbouring network. In an example, the controller is configured to communicate with a transmission configuration database for determining the first transmission power.

In another aspect, the current disclosure describes a method for configuring a radio subsystem with one or more antennas, of an industrial device in an industrial facility, the industrial facility comprising a first section and a second section. The method comprises determining a location of the industrial device in the first section in the industrial facility, determining an orientation of at least one antenna from the one or more antennas of the radio subsystem of the industrial device, and configuring the at least one antenna for transmission based on the determined location of the industrial device and the orientation of the at least one antenna, wherein configuring the at least one antenna includes determining a first transmission power for the at least one antenna, from a first range.

In an example, configuring the at least one antenna further includes determining a transmission pattern from one of an omnidirectional pattern and a directional pattern.

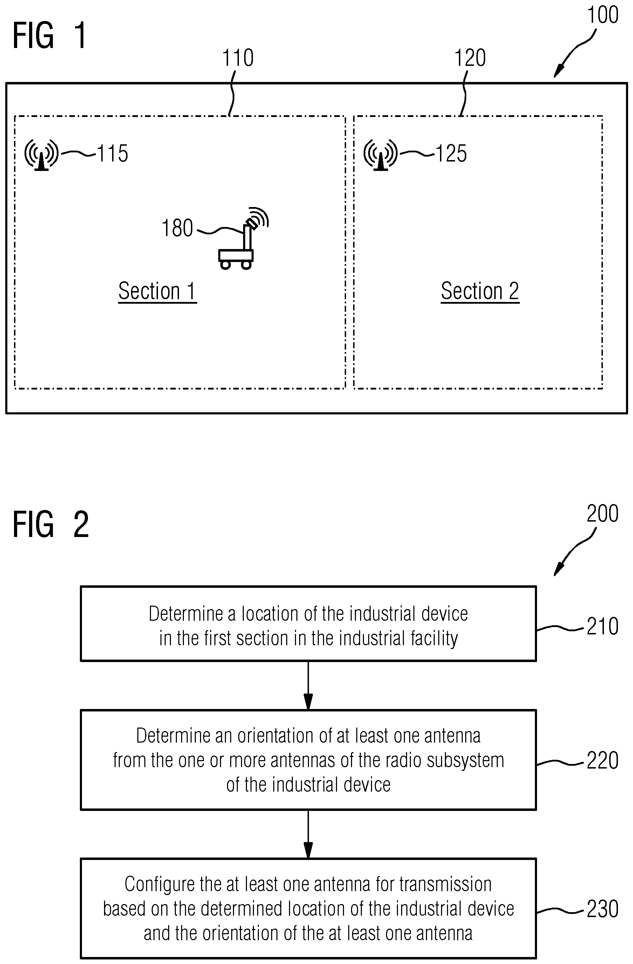

In another aspect, the current disclosure describes a non-transitory storage medium for configuring a radio subsystem of an industrial device in an industrial facility comprising a first section and a second section. The non-transitory storage medium comprises a plurality of instructions, which when executed on one or more processors, cause the one or more processors to determine a location of the industrial device in the first section in the industrial facility, determine an orientation of at least one antenna from the one or more antennas, and configure the at least one antenna for transmission based on the determined location of the industrial device and the orientation of the at least one antenna. Configuring the at least one antenna includes determining a first transmission power for the at least one antenna, from a first range. The advantages of the device apply to the method and the non transitory storage medium described herein. These aspects are further described in relation figures 1-4.

The following detailed description references the drawings, wherein:
Figure 1 illustrates an example industrial facility with two sections;
Figure 2 illustrates an example method of configuring a radio subsystem of an industrial device;
Figure 3 illustrates an example industrial facility with two automated guided vehicles; and
Figure 4 illustrates an example industrial device.

Figure 1 illustrates an industrial facility 100. Industrial facility herein refers to any environment where one or more industrial processes such as manufacturing, refining, smelting, assembly of equipment may take place and includes process plants, oil refineries, automobile factories, etc. The industrial facility 100 includes a plurality of industrial devices including control devices, field devices, mobile devices, operator stations, etc. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling industrial processes in the industrial facility 100. These field devices can include flowmeters, value actuators, temperature sensors, pressure sensors, etc.

Additionally, the industrial facility 100 includes a plurality of mobile devices including one or more robots for performing a plurality of operations such as welding, assembly of parts; one or more autonomous guided vehicles for transportation and handling of material, one or more assets with RFID tags on conveyor belts, etc., in the industrial facility 100. Additionally, the industrial facility 100 may include an operator station for displaying the status of the industrial facility 100 to an operator and for allowing the operator to define KPIs for the control of the industrial processes in the facility. All the industrial devices may be connected to each other via a plant network (realized via wired and wireless technologies).

Communication in the above mentioned plant network happens through wired and wireless means or technologies. Accordingly, the industrial facility 100 includes a plurality of sections (shown in the figure as a first section 110 and a second section 120). Each section may includes a wireless sub-network based on a particular radio configuration and a plurality of network devices connected to the wireless sub-network. Radio configuration herein refers to one or more transmission and reception parameters used by the radios of network devices. Radio configuration herein includes frequency bands used as carrier frequencies, maximum transmission power to be used, antenna characteristics, etc. In an example, the first section includes a wireless sub-network (also referred to as first wireless network) based on 5G private network and utilizes one or more frequencies from the licensed frequency spectrum. The second section includes a wireless sub-network (also referred to second wireless network or neighbouring network) which may be based on public cellular network or WLAN.

The plurality of network devices includes a plurality of industrial gateway devices (also referred to as gateway devices) and a plurality of user devices. Gateway devices herein refers to one or more network devices capable of connecting the user devices to the wireless network. Examples of gateway devices include base stations, routers, switches, relays, access points, etc. The plurality of gateway devices may include stationary gateway devices which may be affixed to a plurality of locations in the industrial facility, and mobile gateway devices which are capable of moving about the sections to provide appropriate network connectivity. For example, as shown in figure 1, the first section 110 contains a stationary gateway device 115 connected to the first wireless network and similarly, the second section 120 contains a stationary gateway device 125 connected to the second wireless network. The plurality of the user devices in the facility are connected to one or more industrial gateway devices to connect to the wireless sub-network of the corresponding section and for communicating information with the other devices and systems in the industrial facility.

Additionally, the first section 110 includes an industrial device 180 which is capable of moving about the plurality of areas in the plant. The industrial device 180 is capable of changing its transmission configuration based on its location within the industrial facility to mitigate interference in neighboring sections (i.e. section 120) due to its radio operations, especially along the borders of the first section 110. This is further explained in description of figure 2.

It may be noted by a person skilled in the art, that while the above mentioned industrial facility is described with two sections, a plurality of sections may be present in the industrial facility. Each section may be associated with one or more buildings within the industrial facility. It may be understood by a person skilled in the art that section herein could refer to a logical grouping of buildings or facilities which use the same wireless network. Additionally, it may be noted that the second section may be not physically contained in enclosure along with the first section, while still being within the radio proximity of the first section.

Figure 2 illustrates a method 200 for configuring a radio subsystem with one or more antennas, of the industrial device 180 in the industrial facility 100. In an example, the method 200 is performed by a controller (also referred to as radio controller) of the industrial device 180. At step 210, the controller of the industrial device 180 determines the location of the industrial device 180 in the industrial facility. In an example, the industrial device includes a location detection subsystem for detecting the location of the industrial device 180 in the industrial facility 100. The controller coordinates with the location detection subsystem to determine the location of the industrial device 180 in the industrial facility 100. The location detection subsystem can use a plurality of localization techniques for detecting the location of the industrial device. Examples of such techniques include RF based localization, laser based localization, etc. In an example, the location of the industrial device is defined using a referential framework such as an three dimensional cartesian coordinate system. Accordingly, the determined location of the industrial device 180 is an array of three values, each value indicative of the position of the industrial device 180 in a corresponding axis.

In another example, the industrial facility includes an localization device (not shown in the figures). The controller of the industrial device 180 is capable of coordinating or communicating with the localization device to determine the location of the industrial device 180.

At step 220, the controller of the industrial device 180 determines an orientation of at least one antenna from the one or more antennas of the radio subsystem of the industrial device. As mentioned previously, the radio subsystem of the industrial device 180 comprises one or more antennas. Each antenna from the one or more antenna is capable of transmitting radio signals using a transmission power from a first range of transmission powers. Additionally, each antenna may be mounted on different positions on the industrial device 180 and can have different orientation from each other. In an example, the antennas are fixed permanently to the industrial device 180 and accordingly, the orientation of each antenna with respect to body of the industrial device 180 is stored in the radio subsystem. Accordingly, in an example, the controller determines the orientation of the industrial device 180 and then based on this, determines the orientation of the antennas (including the at least one antenna). Determination of the orientation of the industrial device is performed using well known techniques.

The controller of the industrial device determines the orientation of the at least one antenna in relation to a referential frame associated with the industrial facility and the orientation of the industrial device 180. In one example, the layout of industrial facility is mapped using a three dimensional cartesian coordinate system which acts the referential frame. Based on the coordinate system, the controller determines the orientation of the at least one antenna. The three dimensional cartesian coordinate system is similar or equivalent to the coordinate system used for defining the location of the industrial device 180. It may be noted, that while the above example uses a three dimensional cartesian coordinate system, other such coordinate systems (such as polar coordinate system, etc.) or referential techniques may be used to determine the location of the industrial device and the orientation of the at least one antenna in the space of the industrial facility.

In another example, each section comprises an area bound by one or more borders. The borders of each section form the referential frame, against which the orientation of the at least on antenna is determined by the controller.

Then, at step 230, the controller configures the at least one antenna for transmission based on the determined location of the industrial device and the orientation of the at least one antenna. Accordingly, the controller determines a first transmission power for the at least one antenna, from a first range of the transmission powers. The first transmission power is selected in order to reduce interference in neighboring sections due to the operation of the at least one antenna. In an example, the controller determines the first transmission power using a transmission configuration database. The transmission configuration database contains a list of locations and antenna orientations with associated transmission powers. In an example, the transmission configuration database may be generated on the basis of measurement of one or more network parameters such as received signal strength indicator in various locations in the first section using radio measurement device. In another example, the transmission configuration database may be generated using simulation of the first and second networks in the first and second sections. The controller performs a lookup operation based on the determined location of the industrial device 180 and the orientation of the at least antenna in the transmission configuration database to determine the first transmission power.

Then based on the determined first transmission, the controller configures the at least one antenna for transmission. Then, the at least one antenna is activated for transmission and reception subsequent to configuration by the controller. It may be noted that while the above method is explained using a transmission configuration database, other such techniques such a mathematical functions, rule based determination, etc., may also be used to perform an equivalent function. For example, a transmission configuration function may be used, which may take the location of the industrial device 180 and the orientation of the at least one antenna as inputs and provide the transmission power to be used as an output.

Accordingly, the current disclosure provides a method for managing interference for mobile industrial devices by regulating transmission power based on the location of the industrial device and orientation of the antenna. This is further explained using the example provided below.

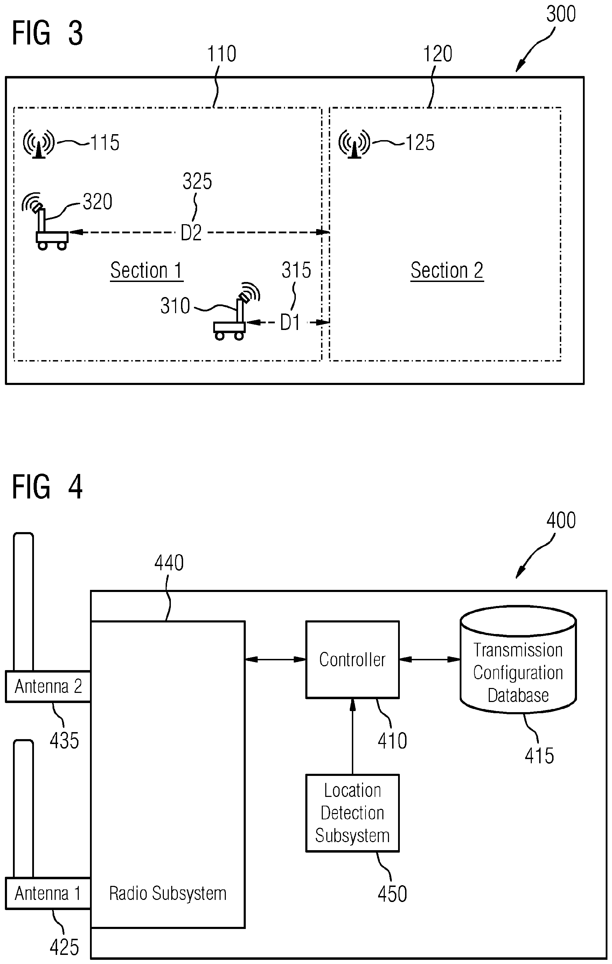

Figure 3 illustrates the industrial facility 100 with the first and second sections (110 and 120). The first section 110 includes automated guided vehicles 310 and 320. The automated guided vehicles 310 and 320 are capable of connecting to a first wireless network in the first section 110. As mentioned previously, the second section 120, includes a second wireless network (also referred to as neighbouring network). The first wireless network includes other devices such as user devices, gateway devices (shown in the figure as gateway device 115). The automated guided vehicles 310 and 320 can be configured to act as a user device (i.e. device which connects to other gateway devices for connecting to the wireless network) or a gateway device (i.e. device which enables other user devices to connect to it to enable these user devices to connect to the wireless network) akin to a mobile access point. The automated guided vehicle 310 is located at a first location in the first section 110. The first location is at distance D1 (shown in the figure as line 315). Similarly, the automated guided vehicle 320 is located at a second location in the first section 110. The second location is a distance D2 (shown in the figure as line 325).

The controller of the first automated guided vehicle 310 configures the antenna of the radio subsystem of the first automated guided vehicle 310 for transmission in accordance in the method 200. Accordingly, the controller of the automated guided vehicle 310 determines the location and the orientation of the antenna of the automated guided vehicle 310. Then, the controller of the first automated guided vehicle 310 looks up the transmission power associated with the location and the orientation in the transmission configuration database. In the example, the transmission configuration database is included in a memory module of the automated guided vehicle 310. Since the first location is at a distance relatively close to the second section 120 and since the orientation of the antenna is towards the second section 120, the transmission power associated in the database is relatively low as the likelihood of interference is high.

Similarly, the controller of the second automated guided vehicle 320 configures the antenna of the radio subsystem of the first automated guided vehicle 320 for transmission in accordance in the method 200. Accordingly, the controller of the automated guided vehicle 320 determines the location and the orientation of the antenna of the automated guided vehicle 320. Then, the controller of the first automated guided vehicle 320 looks up the transmission power associated with the location and the orientation in the transmission configuration database. In the example, the transmission configuration database is included in a memory module of the automated guided vehicle 320. Since the second location is at a considerable distance from the second section 120 and since the orientation of the antenna is away from the second section 120, the transmission power associated in the database in relatively high as the likelihood of interference is low.

In an embodiment, configuring the at least one antenna further includes determining a transmission pattern from one of an omnidirectional pattern and a directional pattern. The controller of the industrial device 180, as a sub step of step 230, determines a transmission pattern to be used by the at least one antenna based on the location of the industrial device 180 and the orientation of the at least one antenna.

Continuing the examples shown in figure 3, the controller of automated guided vehicle 320 determines a transmission pattern for the antenna of the radio subsystem of the automated guided vehicle 320, in coordination with the transmission configuration database. The controller of the automated guided vehicle 320 looks up the transmission pattern associated with the location and the orientation in the transmission configuration database. In the example, since the location of the automated guided vehicle 320 is relatively further away from the section 120 and since orientation of the antenna of the automated guided vehicle 320 is away from the section 120, an omnidirectional transmission pattern is determined for the antenna of the automated guided vehicle 320.

Similarly, the controller of automated guided vehicle 310 determines a transmission pattern for the antenna of the radio subsystem of the automated guided vehicle 310, in coordination with the transmission configuration database. The controller of the automated guided vehicle 310 looks up the transmission pattern associated with the location and the orientation in the transmission configuration database. In the example, since the location of the automated guided vehicle 310 is relatively close to the section 120 and since orientation of the antenna of the automated guided vehicle 310 is towards the section 120, a directional transmission pattern is determined for the antenna of the automated guided vehicle 310.

The present disclosure can take a form of a computer program product comprising computer-usable or computer-readable medium storing program code for use by or in connection with one or more computers, processing units, or instruction execution system. For example, the method 200 may be realized in an industrial device or across one or more devices.

Accordingly, the current disclosure describes an industrial device 400 for wirelessly communicating with a plurality of other industrial devices in the industrial facility 100. The industrial device 400 is capable of movement within the industrial facility 100.

The industrial device comprises a radio subsystem 440 for transmitting and receiving data, and a controller 410 (also referred to as radio controller 410) for operating the radio subsystem 440. The radio subsystem 440 is configured to use a first set of frequencies associated with a first wireless network in the first section 110, wherein the first set of frequencies are from a licensed spectrum. The radio subsystem comprises a first antenna 425 and a second antenna 435. Each antenna is capable of transmitting data using transmission power in a first range. The controller 410 is connected to a location detection subsystem 450 and a transmission configuration database 415. The location detection subsystem 450 is for determining the location of the industrial device 400 in the industrial facility 100. The controller 410 is configured to communicate with the transmission configuration database 415 for determining transmission powers for the antennas (425, 435).

In accordance with the method 200 mentioned above, the controller 410 is configured to determine the location of the industrial device 400 in the first section 110 in the industrial facility 100, determine an orientation of at least one antenna (425) from the one or more antennas (425, 435) in the industrial facility 100; and configure the at least one antenna 425 for transmission based on the determined location of the industrial device 400 and the orientation of the at least one antenna 425. Configuring the at least one antenna 425 includes determining a first transmission power for the at least one antenna 425, from a first range of transmission powers. The at least one antenna 425 is activated for transmission and reception subsequent to configuration by the controller 410.

In another aspect, the current disclosure describes a non-transitory storage medium for configuring a radio subsystem 440 of an industrial device 400 in an industrial facility 100 comprising a first section 110 and a second section 120. The non-transitory storage medium comprises a plurality of instructions, which when executed on one or more processors, cause the one or more processors to determine a location of the industrial device 400 in the first section 110 in the industrial facility 100, determine an orientation of at least one antenna 425 from the one or more antennas (425, 435), and configure the at least one antenna 425 for transmission based on the determined location of the industrial device 400 and the orientation of the at least one antenna 425, wherein configuring the at least one antenna 425 includes determining a first transmission power for the at least one antenna 425, from a first range. In an example, the non transitory storage medium (also referred to as memory module) and the one or more processors are included in the controller 410.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. An industrial device (400) for wirelessly communicating with a plurality of other industrial devices (115) in an industrial facility (100), the industrial facility (100) comprising a first section (110) and a second section (120), the industrial device (400) comprising:
a. a radio subsystem (440) for transmitting and receiving data, the radio subsystem (440) comprising one or more antennas (425, 435), each antenna capable of transmitting data using transmission power in a first range;
b. a controller (410) for operating the radio subsystem (440), wherein the controller (410) is configured to:
i. determine a location of the industrial device (400) in the first section (110) in the industrial facility (100);
ii. determine an orientation of at least one antenna (425) from the one or more antennas (425, 435); and
iii. configure the at least one antenna (425) for transmission based on the determined location of the industrial device (400) and the orientation of the at least one antenna (425), wherein configuring the at least one antenna (425) includes determining a first transmission power for the at least one antenna (425), from the first range.

2. The industrial device (400) as claimed in claim 1,
wherein the at least one antenna (425) is activated for transmission and reception subsequent to configuration of the at least one antenna (425) by the controller (410) .

3. The industrial device (400) as claimed in claim 1,
wherein the industrial device (400) is capable of movement within the industrial facility and includes a location detection subsystem (450) for determining the location of the industrial device (400) in the industrial facility (100).

4. The industrial device (400) as claimed in claim 1,
wherein the radio subsystem (440) is configured to use a first set of frequencies associated with a first wireless network in the first section (110), wherein the first set of frequencies are from a licensed spectrum.

5. The industrial device (400) as claimed in claim 1,
wherein the first section (110) comprises an area bound by one or more borders.

6. The industrial device (400) as claimed in claim 1,
wherein the second section (120) includes a second wireless network configured to use a second set of frequencies.

7. The industrial device (400) as claimed in claim 1,
wherein the controller (410) is configured to communicate with a transmission configuration database (415) for determining the first transmission power.

8. A method (200) for configuring a radio subsystem (440) with one or more antennas (425, 435), of an industrial device (400) in an industrial facility (100), the industrial facility (100) comprising a first section (110) and a second section (120), the method (200) comprising:
a. determining (210) a location of the industrial device (400) in the first section (110) in the industrial facility (100);
b. determining (220) an orientation of at least one antenna (425) from the one or more antennas (425, 435) of the radio subsystem (449) of the industrial device (400); and
c. configuring (230) the at least one antenna (425) for transmission based on the determined location of the industrial device (400) and the orientation of the at least one antenna (425), wherein configuring the at least one antenna (425) includes determining a first transmission power for the at least one antenna (425), from a first range.

9. The method (200) as claimed in claim 8, wherein configuring (230) the at least one antenna (425) further includes determining a transmission pattern from one of an omnidirectional pattern and a directional pattern.

10. A non-transitory storage medium for configuring a radio subsystem (440) of an industrial device (400) in an industrial facility (100) comprising a first section (110) and a second section (120), the non-transitory storage medium comprising a plurality of instructions, which when executed on one or more processors, cause the one or more processors to:
a. determine a location of the industrial device (400) in the first section (110) in the industrial facility (100);
b. determine an orientation of at least one antenna (425) from one or more antennas (425, 435) of the radio subsystem (440); and
c. configure the at least one antenna (425) for transmission based on the determined location of the industrial device (400) and the orientation of the at least one antenna (425), wherein configuring the at least one antenna (425) includes determining a first transmission power for the at least one antenna (425), from a first range.
